(19) Europäisches Patentamt
European Patent Office
Office européen des brevets

(11) EP 1 571 125 A2

# (12) EUROPEAN PATENT APPLICATION

(43) Date of publication:
07.09.2005 Bulletin 2005/36

(51) Int Cl.[7]: C01B 3/58, B01J 23/58, B01J 23/42

(21) Application number: 05004331.4

(22) Date of filing: 28.02.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 01.03.2004 JP 2004055928

(71) Applicant: N.E. Chemcat Corporation
Tokyo (JP)

(72) Inventor: Endou, Masashi Ichikawa Kenkyusho
Ichikawa-shi Chiba-ken (JP)

(74) Representative: Tönhardt, Marion
Forrester & Boehmert,
Pettenkoferstrasse 20-22
80336 München (DE)

## (54) Catalyst for removal of carbon monoxide from hydrogen gas

(57) A catalyst for the removal of carbon monoxide from hydrogen gas, including a carrier formed of a metal oxide, and a platinum component and an alkali metal component supported on the carrier. Conversion of carbon monoxide into carbon dioxide is achieved with a high catalytic activity without occurrence of generation of methane by a methanation reaction.

Fig. 1

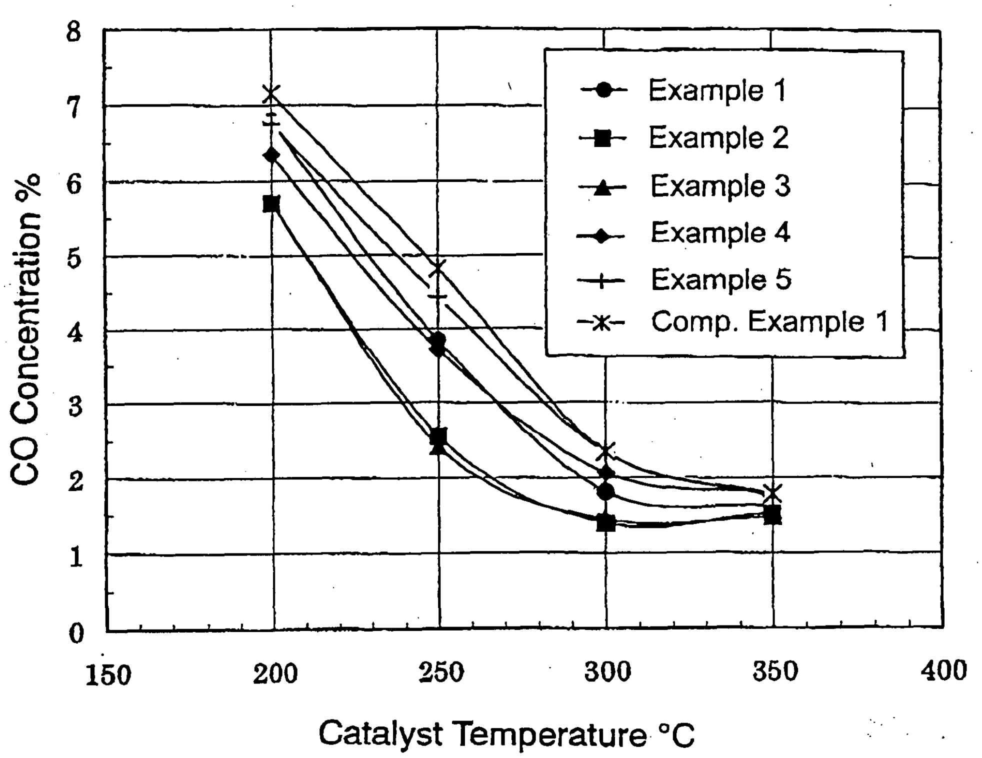


EP 1 571 125 A2

## Description

### BACKGROUND OF THE INVENTION

1. Field of the Invention

The present invention relates to a carbon monoxide (CO) removal catalyst that is used for removing CO contained within a hydrogen gas such as reformed gas, by converting the CO to carbon dioxide ($CO_2$) via a water gas shift reaction.

2. Description of the Prior Art

In recent years, improvements in solid polymer fuel cells have begun to attract considerable attention. In a solid polymer fuel cell, hydrogen is supplied to the anode as fuel, and oxygen or air is supplied to the cathode as an oxidizer, and reaction occurs via a solid electrolyte membrane (a proton exchange membrane), thus generating a current. The electrode catalyst, at both the anode and the cathode, uses either platinum black, or a catalyst in which platinum or a platinum alloy are supported on a carbon carrier. If the hydrogen contains even small quantities of CO, then it is known that the anode electrode catalyst becomes poisoned, leading to a deterioration in the performance of the cell. Accordingly, as much CO as possible must be removed from the hydrogen.

Examples of processes for removing CO from hydrogen gas include a process wherein oxygen is introduced into the reaction system in the presence of a catalyst, thereby selectively oxidizing the CO to $CO_2$ for subsequent removal (the equation (1) shown below), and a process in which water ($H_2O$) is added to the reaction system, and a water gas shift reaction is initiated in the presence of a catalyst, thereby converting the CO to $CO_2$ for removal (the equation (2) shown below).

[CO Oxidation Reaction]

$$CO + 1/2O_2 \rightarrow CO_2 \qquad (1)$$

[Water Gas Shift Reaction]

$$CO + H_2O \Leftrightarrow CO_2 + H_2 \qquad (\Delta H = -41\ kJ/mol)$$

In the former process, if the hydrogen concentration in the reaction system is high, then as shown below by the equation (3), the introduced oxygen reacts with the large quantity of hydrogen in the system, meaning a catalyst that displays high selectivity for the CO oxidation reaction must be used (patent reference 1).

$$H_2 + 1/2O_2 \rightarrow H_2O \qquad (3)$$

On the other hand, in a process for producing hydrogen using a hydrocarbon raw material such as methane, the hydrocarbon and steam are reacted together to generate a reformed gas containing hydrogen and CO, and the water gas shift reaction described above is widely known as a process for subsequently removing CO from this reformed gas (patent reference 2).

This process for removing CO by a water gas shift reaction is generally conducted by combining two stages with different reaction temperatures. These reactions are known as the high temperature shift reaction and the low temperature shift reaction, in accordance with the respective reaction temperatures. The high temperature shift reaction is typically conducted at a reaction temperature of approximately 400°C, and the low temperature shift reaction at a reaction temperature of approximately 250°C

Examples of conventional catalysts include iron-chromium-based catalysts for the high temperature shift reaction, and copper-zinc-based catalysts for the low temperature shift reaction (patent reference 3, patent reference 4).

However, these catalysts suffer from oxidation, by air-borne oxygen, of the metal that functions as the active component within the catalyst, leading to a marked deterioration in the catalytic activity.

As a result, the use of catalysts containing noble metals that are resistant to oxidation has also been proposed. For example, as a catalyst for the low temperature shift reaction, a catalyst in which platinum or platinum-rhenium is supported on a zirconia carrier has been proposed as a catalyst with superior catalytic activity to that provided by conventional copper-zinc-based catalysts (patent reference 5). However, when the water gas shift reaction is conducted at a high temperature (of approximately 350°C) using this catalyst, suppression of a side reaction represented by an equation (4) shown below, in which methane is generated via a methanation reaction, is unsatisfactory, meaning the efficiency of the hydrogen generation reaction deteriorates.

[Methanation Reaction]

$$CO + 3H_2 \rightarrow CH_4 + H_2O \qquad (4)$$

This side reaction is extremely undesirable in those cases where the aim is the generation of a high yield of hydrogen from which CO has been removed via the water gas shift reaction. For this reason, a water gas shift reaction catalyst that suppresses the above methanation reaction, and also functions as a highly active CO removal catalyst has been keenly sought.

The applicants of the present invention have also proposed a catalyst in which platinum and/or a platinum oxide, and rhenium and/or rhenium oxide are supported on a carrier comprising titania or a metal oxide containing titania (patent reference 6). This catalyst displays substantially satisfactory levels of catalytic activity and methanation reaction suppression, although further improvement in the level of methanation reaction suppression would be desirable.

[Patent Reference 1] UK Pat. No. 1,116,585
[Patent Reference 2] US Pat. No. 6,562,088
[Patent Reference 3] JP59-46883B
[Patent Reference 4] US Pat. No. 4,177,252
[Patent Reference 5] US Pat. No. 6,777,117
[Patent Reference 6] JP2003-251181A

## BRIEF DESCRIPTION OF THE DRAWINGS

[Fig. 1] A graph showing the CO removal performance at various catalyst temperatures for catalysts of the examples -1 through -5, and the comparative example -1.
[FIG. 2] A graph showing the methanation reaction suppression performance at a catalyst temperature of 350°C for the catalysts of the examples -1 through -5, and the comparative example -1.
[FIG. 3] A graph showing the CO removal performance at various catalyst temperatures for catalysts of the example -3, the examples -6 through -8, and the comparative example -1.
[FIG. 4] A graph showing the methanation reaction suppression performance at a catalyst temperature of 350°C for the catalysts of the example -3, the examples -6 through -8, and the comparative example -1.
[FIG. 5] A graph showing the CO removal performance at various catalyst temperatures for catalysts of the example -9 and the comparative example -2.
[FIG. 6] A graph showing the CO removal performance at various catalyst temperatures for catalysts of the example -10 and the comparative example -3.
[FIG. 7] A graph showing the methanation reaction suppression performance at a catalyst temperature of 350°C for the catalysts of the example -9, the example -10, the comparative example -2, and the comparative example -3.

## SUMMARY OF THE INVENTION

An object of the present invention is to provide a catalyst, which in the aforementioned water gas shift reaction, provides a high level of catalytic activity, suppresses the methanation reaction, and enables an efficient reduction in the CO concentration in the hydrogen gas.

In order to achieve the above object, the present invention provides

a catalyst for the removal of carbon monoxide from hydrogen gas, comprising a carrier comprising a metal oxide, and a platinum component and an alkali metal component supported on the carrier.

A CO removal catalyst of the present invention provides a high level of catalytic activity for the removal of CO from hydrogen gas via a water gas shift reaction, and also enables favorable suppression of the methanation reaction that generates methane via a side reaction at high temperatures. This CO removal catalyst of the present invention is useful, for example, in the production of hydrogen gas for use as the fuel for fuel cells.

## DETAILED DESCRIPTION OF THE PREFERRED EMBODIMENTS

As follows is a more detailed description of a CO removal catalyst of the present invention.

[Carrier]

In the present invention, a carrier comprising a metal oxide is used. This carrier typically uses a porous material in granular or pellet form, with a particle size of approximately 2 to 4 mm.

Examples of this metal oxide include zirconia, titania, alumina, silica, silica-alumina, zeolite, and ceria. Of these, the use of zirconia, titania, or alumina is preferred, due to the comparative ease with which the catalyst can be prepared. The metal oxide may be either a single compound, or a combination of two or more different compounds.

[Support of Main Active Component]

A platinum component is supported on the above carrier. The platinum component functions as the main active component in the catalyst of the present invention.

The quantity of the supported platinum component is such that the quantity of the platinum component relative to the combined weight of the above carrier and the platinum component, is typically within a range from 0.01 to 20.0% by weight, and preferably from 0.01 to 10% by weight, and even more preferably from 0.1 to 5.0% by weight in terms of metallic platinum. If this quantity of supported platinum is too small, then achieving a satisfactory level of catalytic activity for removing the CO in the hydrogen gas through conversion to $CO_2$ via the water gas shift reaction can be difficult, whereas in contrast, even if the quantity is very large, not only can little further improvement in catalytic activity be expected, but the process also becomes economically unviable.

The platinum component may be supported on the above carrier as metallic platinum, an oxide, or a combination of the two. The status of combination of metal and oxide means that metallic platinum and a platinum oxide are present in a state of mixture or a state of composite. Because the catalyst is subjected to reduction treatment using hydrogen gas or the like prior to use, even in those cases where platinum is present as a platinum oxide, this oxide can be converted to catalytically active platinum metal, meaning absolutely no detrimental effects arise.

There are no particular restrictions on the method of supporting the platinum component, and conventional methods can be employed.

For example, a required quantity of either a nitric acid solution of dinitrodiammineplatinum $[Pt(NO_2)_2(NH_3)_2]$ or an aqueous solution of chloroplatinic acid hexahydrate or the like can be dripped onto the above carrier, and following satisfactory impregnation into the carrier, the carrier is dried, and subsequently calcined at a temperature of 300 to 700°C, and preferably from 400 to 600°C, for a period of 30 minutes to 2 hours, thereby supporting platinum metal or the like onto the carrier.

[Support of Auxiliary Active Component]

A catalyst of the present invention is also characterized by the fact that in addition to the main active component described above, an alkali metal component is also supported on the aforementioned carrier. The alkali metal includes lithium, sodium, potassium, rubidium, cesium, and a combination of two or more thereof. The alkali metal component exists normally in a state of inorganic compounds stable at temperatures at which the catalyst is used.

This alkali metal inorganic compound functions as an auxiliary active component, and by combining this auxiliary active component with the main active component described above, a catalyst of the present invention is able to offer the superior effects of improved catalytic activity for the water gas shift reaction, and superior suppression of the methanation reaction described above.

The supported quantity of this auxiliary active component is typically sufficient to produce a quantity of alkali metal within the catalyst of the present invention of 0.01 to 20% by weight, and preferably from 0.01 to 10% by weight, and even more preferably from 0.1 to 10% by weight. If this quantity of supported auxiliary active component is too small, then the effect of the component in improving the water gas shift reactivity is unsatisfactory, and the suppression of the methanation reaction tends to be inadequate, whereas in contrast, even if the quantity is very large, no further improvement in the above effects can be expected.

When preparing a catalyst of the present invention, a method can be used wherein the main active component is first supported on the carrier in the manner described above, and the auxiliary active component is then supported on the resulting main active component-supporting carrier.

In one example of a method of supporting the auxiliary active component, an aqueous solution of the alkali metal compound, suitable examples of which include salts of inorganic acids, including carbonates such as potassium carbonate, sodium carbonate, rubidium carbonate, and cesium carbonate, and nitrates such as potassium nitrate and lithium nitrate, salts of organic acids such as potassium oxalate, and hydroxides such as potassium hydroxide, is dripped onto, and impregnated into the aforementioned main active component-supporting carrier, and the carrier is then dried at a temperature of 100 to 110°C, and subsequently calcined at a temperature of 300 to 700°C, and preferably from 400 to 600°C, for a period of 30 minutes to 2 hours. The salts of inorganic acids and hydroxides stated above used as starting materials have considerably high decomposition temperatures. Therefore, it is assumed that when temperature for calcination is lower than the decomposition temperature of a starting inorganic material, it would be supported as its original state; however, when temperature for calcination is higher than the decomposition temperature, it would be converted into another inorganic compound such as oxides. It is assumed that the salts of organic acids would be converted into inorganic compounds such as carbonates. The catalysts according to the present invention are normally subjected to reduction treatment before use, by which an alkali metal component is reduced but not to its metallic state, and it would be present as some inorganic compound.

[Features of Catalysts of the Present Invention]

In a catalyst of the present invention, prepared in the manner described above, the carrier of metal oxide supports platinum, and also supports, as an auxiliary active component, an inorganic compound of at least one element selected from a group consisting of the alkali metals of lithium, sodium, potassium, rubidium, and cesium, and as a result, the activity of the catalyst in removing CO by conversion to $CO_2$ via a water gas shift reaction can be improved, and the methanation reaction can also be better suppressed.

[Method for Removal of Carbon Monoxide]

The present invention also provides a method for removal of carbon monoxide from a hydrogen gas containing carbon monoxide, which comprises bringing said hydrogen gas into contact with a catalyst according to the present invention described above, in the presence of water (normally steam).

In the method, said hydrogen gas is brought into contact with the catalyst at a temperature of preferably 100 to 500°C, more preferably 200 to 350°C, and even more preferably 230 to 350°C. Furthermore, said steam ($H_2O$) is present such that the ratio of $H_2O$ to CO by volume ($H_2O/CO$) is preferably in a range of 2.2 to 6.8, more preferably 3.2 to 5.4.

The hydrogen gas containing carbon monoxide to be treated by the method described above includes, for example, reformed gas.

The present invention will now be described specifically with reference to non-limitative examples.

## EXAMPLES

[Example -1]

980 g of a granular zirconia carrier (RSP-HP, manufactured by Daiichi Kigenso Kagaku Kogyo Co., Ltd.) was placed in a container, and 265 mL of a dinitrodiammineplatinum nitric acid solution (equivalent platinum metal concentration: 75 g/L) was dripped onto, and impregnated into the carrier. Following completion of the dropwise addition, the carrier was left to stand for 1 hour. The carrier was then dried in the air at 110°C for 2 hours, using a dryer. Subsequently, the carrier was placed in a furnace, the temperature was raised from room temperature to 500°C over a 1 hour period, and calcination (in the air) was conducted at 500°C for 1 hour, thereby yielding a granular zirconia carrier with platinum supported thereon (quantity of supported platinum: 2% by weight). This material is called "basic catalyst A".

100 g of the thus obtained basic catalyst A was placed in a container, and 27 mL of an aqueous solution of lithium nitrate with a lithium concentration of 2.5 mol/L (equivalent quantity of lithium: 0.47 g) was dripped onto, and impregnated into the catalyst. Following completion of the dropwise addition, the catalyst was left to stand for 1 hour. The catalyst was then dried in the air at 110°C for 2 hours, using a dryer. Subsequently, the catalyst was placed in a furnace, the temperature was raised from room temperature to 500°C over a 1 hour period, and calcination (in the air) was conducted at 500°C for 1 hour, thereby yielding a CO removal catalyst in which an inorganic compound equivalent to 0.47% by weight of elemental lithium had been supported on the platinum-supporting granular zirconia carrier (quantity of supported platinum: 2% by weight).

[Example -2]

With the exception of using 27 mL of an aqueous solution of sodium carbonate with a sodium concentration of 2.5 mol/L (equivalent quantity of sodium: 1.55 g) instead of the aqueous solution of lithium nitrate described in the example -1, the same process as the example -1 was used to prepare a CO removal catalyst in which an inorganic compound equivalent to 1.5% by weight of elemental sodium had been supported on a platinum-supporting granular zirconia carrier (quantity of supported platinum: 2% by weight).

[Example -3]

With the exception of using 27 mL of an aqueous solution of potassium carbonate with a potassium concentration of 2.5 mol/L (equivalent quantity of potassium: 2.64 g) instead of the aqueous solution of lithium nitrate described in the example -1, the same process as the example -1 was used to prepare a CO removal catalyst in which an inorganic compound equivalent to 2.6% by weight of elemental potassium had been supported on a platinum-supporting granular zirconia carrier (quantity of supported platinum: 2% by weight).

[Example -4]

With the exception of using 27 mL of an aqueous solution of rubidium carbonate with a rubidium concentration of 2.5 mol/L (equivalent quantity of rubidium: 5.77 g) instead of the aqueous solution of lithium nitrate described in the example -1, the same process as the example -1 was used to prepare a CO removal catalyst in which an inorganic compound equivalent to 5.5% by weight of elemental rubidium had been supported on a platinum-supporting granular zirconia carrier (quantity of supported platinum: 2% by weight).

[Example -5]

With the exception of using 27 mL of an aqueous solution of cesium carbonate with a cesium concentration of 2.5 mol/L (equivalent quantity of cesium: 8.97 g) instead of the aqueous solution of lithium nitrate described in the example -1, the same process as the example -1 was used to prepare a CO removal catalyst in which an inorganic compound equivalent to 8.2% by weight of elemental cesium had been supported on a platinum-supporting granular zirconia carrier (quantity of supported platinum: 2% by weight).

The composition of, and the salts used in each of the CO removal catalysts prepared in the examples -1 through -5 are summarized in Table 1, together with the composition of the aforementioned basic catalyst A, which was used as a comparative example -1.

[Table 1]

| | Catalyst composition | Salt |
|---|---|---|
| Example -1 | 0.47% Li / 2% Pt / $ZrO_2$ | Lithium nitrate |
| Example -2 | 1.5% Na / 2% Pt / $ZrO_2$ | Sodium carbonate |
| Example -3 | 2.6% K / 2% Pt / $ZrO_2$ | Potassium carbonate |
| Example -4 | 5.5% Rb / 2% Pt / $ZrO_2$ | Rubidium carbonate |
| Example -5 | 8.2% Cs / 2% Pt / $ZrO_2$ | Cesium carbonate |
| Comparative Example -1 | 2% Pt / $ZrO_2$ | - |

[Evaluation]

The catalysts of the examples -1 through -5, and the comparative example -1 were evaluated for CO removal performance and the like.

[Evaluation Method]

Each of the above catalysts was used to fill a reaction tube of capacity 15.0 mL, and with a mixed gas of $H_2$ (20% by volume) and $N_2$ (80% by volume) flowing through the tube, the temperature was raised from room temperature to 300°C over a period of 30 minutes, and then held at that temperature for 1 hour to effect a reduction treatment.

Next, the mixed gas was replaced with $N_2$ gas, heating was halted, and the temperature was allowed to fall to 100°C or lower. Once the temperature had fallen to 100°C or lower, the $N_2$ gas supply was halted, and a mixed gas comprising $H_2$ (80% by volume), $CO_2$ (12% by volume), and CO (8% by volume) was supplied to the tube under conditions including a SV (space velocity) of 10,000 ($h^{-1}$). $H_2O$ (steam) was then introduced into this mixed gas in sufficient quantity to satisfy the condition $H_2O/CO = 4.2$ (volumetric ratio). The temperature of a bed of the catalyst (hereinafter, abbreviated "catalyst temperature") was raised to 200°C, and with the catalyst held in a steady state at a temperature of 200°C, the CO concentration (% by volume) in the gas at the reaction tube outlet was measured using a gas analyzer (Bex 2201 E, manufactured by Best Instruments Co., Ltd.) that uses a non-dispersive infrared measurement method, after $H_2O$ is excluded from the gas.

Measurements were also conducted in a similar manner for catalyst temperatures of 250°C, 300°C, and 350°C.

Furthermore, in the case of a catalyst temperature of 350°C, the $CH_4$ content (ppm) at the reaction tube outlet was also measured using the same measurement equipment and a similar measurement technique.

[Measurement Results and Analysis]

The measurement results for the examples -1 through -5, and the comparative example -1 are shown in FIG. 1 and FIG. 2.

From FIG. 1 it is evident that in all of the examples -1 through -5, where a catalyst with an auxiliary active component was used, a reduction in the CO concentration was observed.

Furthermore, from the measurement results shown in FIG. 2, which show the $CH_4$ concentration which indicates the progression of the methanation side reaction, it is evident that in all of the examples -1 through -5, where a catalyst with an auxiliary active component was used, the methanation reaction had been suppressed to very low levels.

From the results shown in FIG. 1 and FIG. 2 it is evident that amongst the catalysts of the examples -1 through -5, the most effective auxiliary active component in terms of CO removal performance and methanation reaction suppression was the inorganic compound of potassium.

[Examples -6 through -8]

Examples using potassium hydroxide and other potassium salts different from potassium carbonate are presented in the following examples -6 through -8.

[Example -6]

With the exception of using 27 mL of an aqueous solution of potassium hydroxide with a potassium concentration of 2.5 mol/L (equivalent quantity of potassium: 2.64 g) instead of the aqueous solution of lithium nitrate described in the example -1, the same process as the example -1 was used to prepare a CO removal catalyst in which an inorganic compound equivalent to 2.6% by weight of elemental potassium had been supported on a platinum-supporting granular zirconia carrier (quantity of supported platinum: 2% by weight).

[Example -7]

With the exception of using 27 mL of an aqueous solution of potassium nitrate with a potassium concentration of 2.5 mol/L (equivalent quantity of potassium: 2.64 g) instead of the aqueous solution of lithium nitrate described in the example -1, the same process as the example -1 was used to prepare a CO removal catalyst in which an inorganic compound equivalent to 2.6% by weight of elemental potassium had been supported on a platinum-supporting granular zirconia carrier (quantity of supported platinum: 2% by weight).

[Example -8]

With the exception of using 27 mL of an aqueous solution of potassium oxalate with a potassium concentration of 2.5 mol/L (equivalent quantity of potassium: 2.64 g) instead of the aqueous solution of lithium nitrate described in the example -1, the same process as the example -1 was used to prepare a CO removal catalyst in which an inorganic compound equivalent to 2.6% by weight of elemental potassium had been supported on a platinum-supporting granular zirconia carrier (quantity of supported platinum: 2% by weight).

The composition of, and the salts used in each of the CO removal catalysts prepared in the examples -6 through -8 are summarized in Table 2.

[Table 2]

| | Catalyst composition | Salt |
|---|---|---|
| Example -6 | 2.6% K / 2% Pt / $ZrO_2$ | Potassium hydroxide |
| Example -7 | 2.6% K / 2% Pt / $ZrO_2$ | Potassium nitrate |
| Example -8 | 2.6% K / 2% Pt / $ZrO_2$ | Potassium oxalate |

[Evaluation, Measurement Results, and Analysis]

The CO removal performance of each of the catalysts of the examples -6 through -8 was evaluated in the same manner as that described for the examples -1 through -5.

The measurement results are shown in FIG. 3 and FIG. 4, compared with the results for the comparative example -1 and the example -3.

From FIG. 3 and FIG. 4 it is evident that in all of the catalysts where an inorganic compound of potassium was supported as an auxiliary active component, by using either a potassium salt or potassium hydroxide during the preparation of the catalyst, namely, in the example -3 and the examples -6 through -8, both a reduction in the CO concentration and a suppression of the methanation reaction were observed. Of these catalysts, the catalyst prepared using potassium carbonate as the potassium compound was the most effective.

[Examples -9 and -10, Comparative Examples -2 and -3]

As follows is a description of examples with different metal oxides as the carrier.

[Example -9]

196 g of a granular titania carrier (CS-300S-24, manufactured by Sakai Chemical Industry Co., Ltd.) was placed in a container, and 60 mL of a dinitrodiammineplatinum nitric acid solution with an equivalent platinum metal concentration of 6.7 g/100 mL (equivalent quantity of platinum metal: 4 g) was dripped onto, and impregnated into the carrier. Following completion of the dropwise addition, the carrier was left to stand for 1 hour. The carrier was then dried in the air at 110°C for 2 hours, using a dryer. Subsequently, the carrier was placed in a furnace, the temperature was raised from room temperature to 500°C over a 1 hour period, and calcination (in the air) was conducted at 500°C for 1 hour, thereby yielding a granular titania carrier with platinum supported thereon (quantity of supported platinum: 2% by weight). This material is called "basic catalyst B".

100 g of the thus obtained basic catalyst B was placed in a container, and 30 mL of an aqueous solution of potassium carbonate with a potassium concentration of 2.5 mol/L (equivalent quantity of potassium: 2.93 g) was dripped onto, and impregnated into the catalyst. Following completion of the dropwise addition, the catalyst was left to stand for 1 hour. The catalyst was then dried in the air at 110°C for 2 hours, using a dryer. Subsequently, the catalyst was placed in a furnace, the temperature was raised from room temperature to 500°C over a 1 hour period, and calcination (in the air) was conducted at 500°C for 1 hour, thereby yielding a CO removal catalyst in which an inorganic compound equivalent to 2.8% by weight of elemental potassium had been supported on the platinum-supporting granular titania carrier (quantity of supported platinum: 2% by weight).

[Example -10]

196 g of a granular alumina carrier (KHA-24, manufactured by Sumitomo Chemical Co., Ltd.) was placed in a container, and 80 mL of a dinitrodiammineplatinum nitric acid solution with an equivalent platinum metal concentration of 5 g/100 mL (equivalent quantity of platinum metal: 4 g) was dripped onto, and impregnated into the carrier. Following completion of the dropwise addition, the carrier was left to stand for 1 hour. The carrier was then dried in the air at 110°C for 2 hours, using a dryer. Subsequently, the carrier was placed in a furnace, the temperature was raised from room temperature to 500°C over a 1 hour period, and calcination (in the air) was conducted at 500°C for 1 hour, thereby yielding a granular alumina carrier with platinum supported thereon (quantity of supported platinum: 2% by weight). This material is called "basic catalyst C".

100 g of the thus obtained basic catalyst C was placed in a container, and 40 mL of an aqueous solution of potassium carbonate with a potassium concentration of 2.5 mol/L (equivalent quantity of potassium: 3.91 g) was dripped onto, and impregnated into the catalyst. Following completion of the dropwise addition, the catalyst was left to stand for 1 hour. The catalyst was then dried in the air at 110°C for 2 hours, using a dryer. Subsequently, the catalyst was placed in a furnace, the temperature was raised from room temperature to 500°C over a 1 hour period, and calcination (in the air) was conducted at 500°C for 1 hour, thereby yielding a CO removal catalyst in which an inorganic compound equivalent to 3.7% by weight of elemental potassium had been supported on the platinum-supporting granular alumina carrier (quantity of supported platinum: 2% by weight).

The composition of, and the salts used in each of the CO removal catalysts prepared in the examples -9 and -10 are summarized in Table 3, together with the composition of the aforementioned basic catalyst B, which was used as a comparative example -2, and the composition of the aforementioned basic catalyst C, which was used as a comparative example -3.

[Table 3]

| | Catalyst composition | Salt |
|---|---|---|
| Example -9 | 2.8% K / 2% Pt / $TiO_2$ | Potassium carbonate |
| Example -10 | 3.7% K / 2% Pt / $Al_2O_3$ | Potassium carbonate |
| Comparative Example -2 | 2% Pt / $TiO_2$ | - |
| Comparative Example -3 | 2% Pt / $Al_2O_3$ | - |

[Evaluation, Measurement Results, and Analysis]

The CO removal performance of each of the catalysts of the examples -9 and -10, and the comparative examples -2 and -3, was evaluated in the same manner as that described for the examples -1 through -5.

The measurement results for the example -9 and the comparative example -2 are shown in FIG. 5 and FIG. 7.

The measurement results for the example -10 and the comparative example -3 are shown in FIG. 6 and FIG. 7.

From FIG. 5 it is evident that when titania was used as the carrier, a reduction in CO concentration was achieved at catalyst temperatures of 250°C or greater.

From FIG. 6 it is evident that when alumina was used as the carrier, a reduction in CO concentration was achieved at any catalyst temperature within the range from 200°C to 350°C.

From FIG. 7 it is evident that with both the titania carrier and the alumina carrier, supporting an inorganic compound of potassium as an auxiliary active component suppressed the methanation reaction.

Accordingly, a CO removal catalyst according to the present invention suppresses the methanation reaction in a water gas shift reaction system to very low levels, even at high temperatures (of approximately 350°C), while maintaining a high level of shift reaction activity.

**Claims**

1. A catalyst for removal of carbon monoxide from a hydrogen gas containing carbon monoxide, comprising a carrier comprising a metal oxide, and a platinum component and an alkali metal component supported on said carrier.

2. The catalyst according to claim 1, wherein a quantity of said platinum component relative to a combined weight of said carrier and said platinum component is within a range from 0.01 to 20.0% by weight in terms of metallic platinum.

3. The catalyst according to claim 1, wherein said platinum component is present as metallic platinum, an oxide, or a combination thereof.

4. The catalyst according to claim 1, wherein a quantity of said alkali metal component within said catalyst is within a range from 0.01 to 20.0% by weight in terms of metallic alkali metal.

5. The catalyst according to claim 1, wherein said alkali metal component is present in the state of an inorganic compound.

6. A method for removal of carbon monoxide from a hydrogen gas containing carbon monoxide, which comprises bringing said hydrogen gas into contact with a catalyst according to claim 1 in the presence of water.

7. The method according to claim 6, wherein said hydrogen gas is brought into contact with the catalyst at a temperature of 100 to 500°C.

8. The method according to claim 6, wherein said water is present as steam such that the ratio of $H_2O$ to CO contained in said hydrogen gas by volume ($H_2O$/CO) is in a range of 2.2 to 6.8.

9. The method according to claim 6, wherein said hydrogen containing carbon monoxide is a reformed gas.

Fig. 1

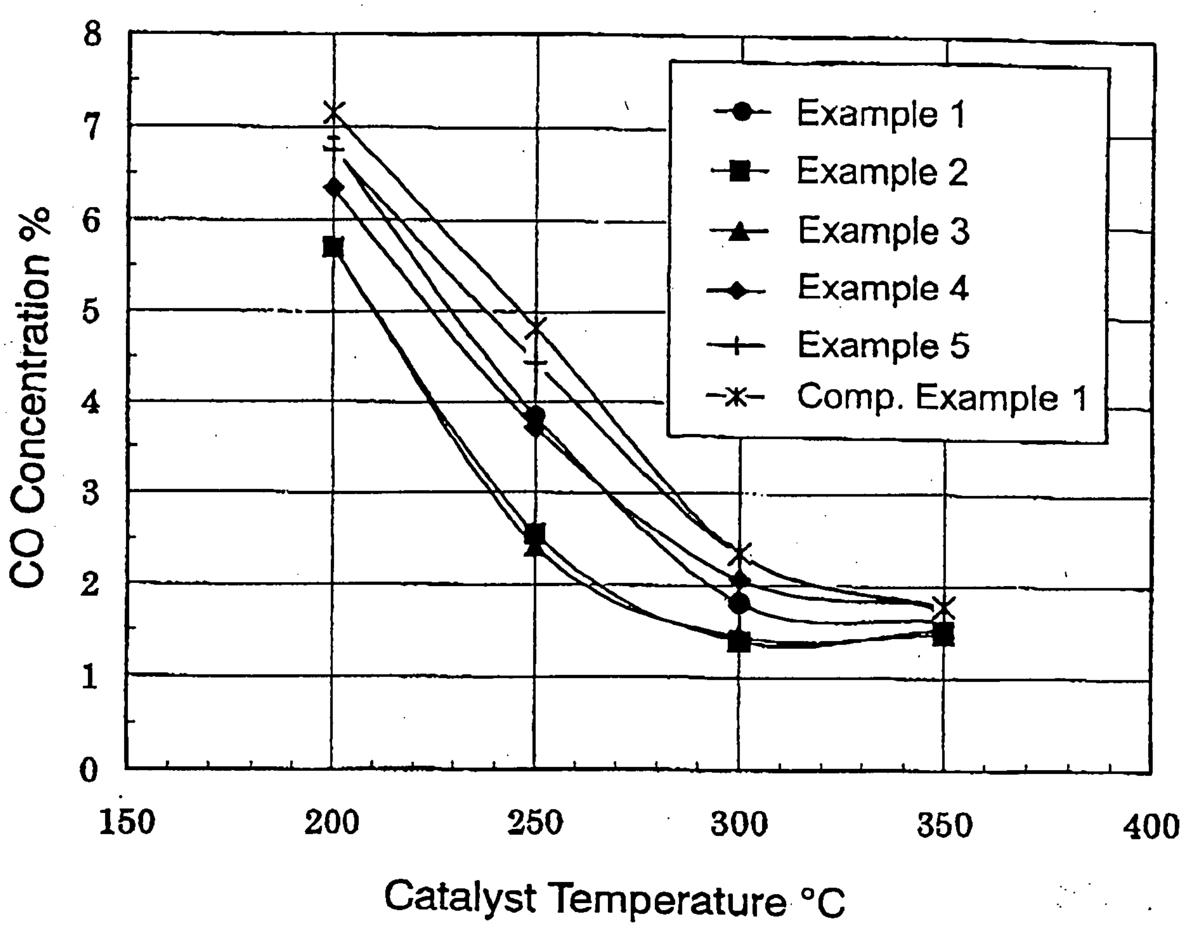
8
7
6
5
4
3
2
1
0
150
200
250
300
350
400
CO Concentration %
Catalyst Temperature °C
Example 1
Example 2
Example 3
Example 4
Example 5
Comp. Example 1

Fig. 2

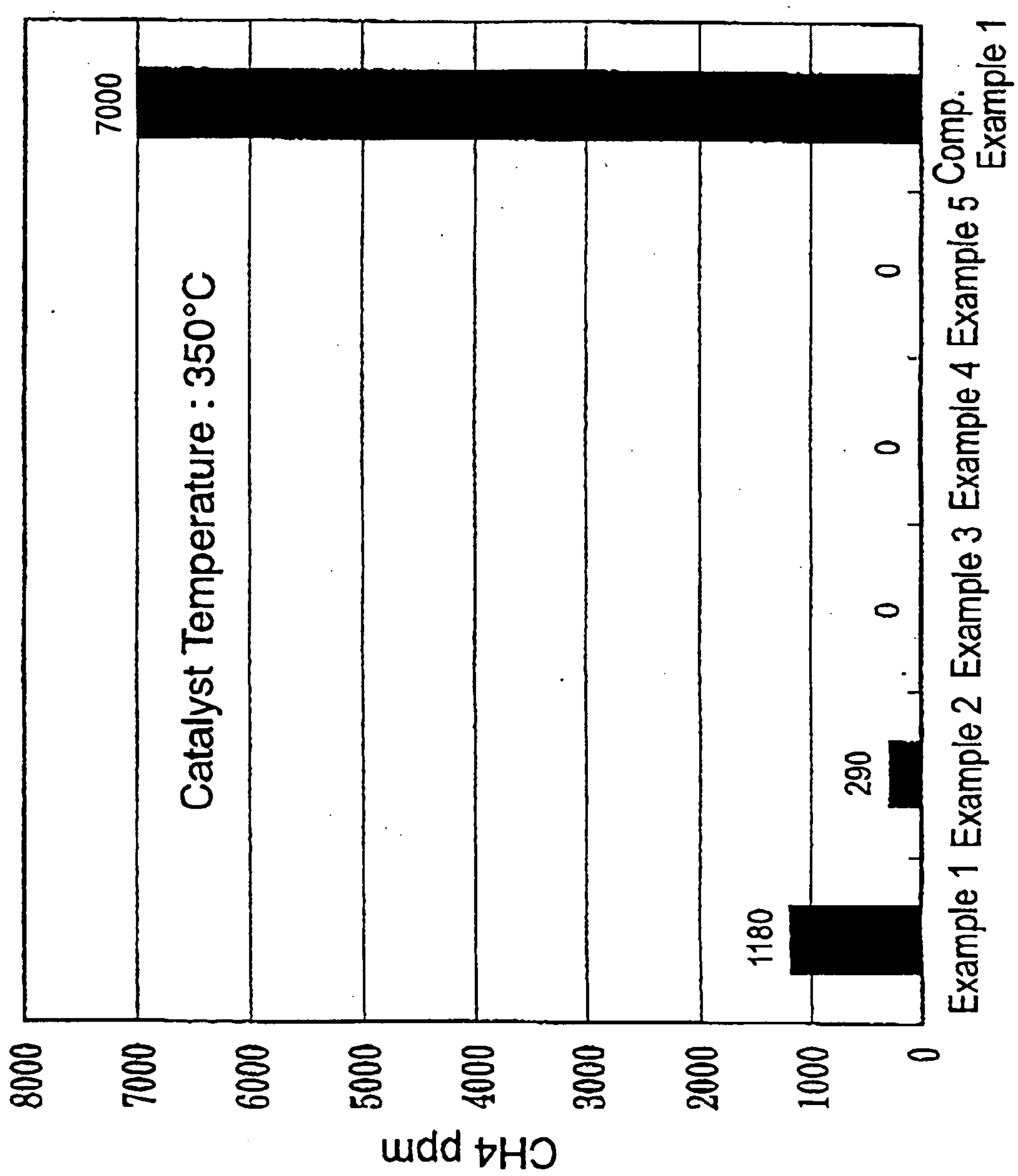
Catalyst Temperature : 350°C
CH4 ppm
0
1000
2000
3000
4000
5000
6000
7000
8000
1180
290
0
0
0
7000
Example 1
Example 2
Example 3
Example 4
Example 5
Comp. Example 1

Fig. 3

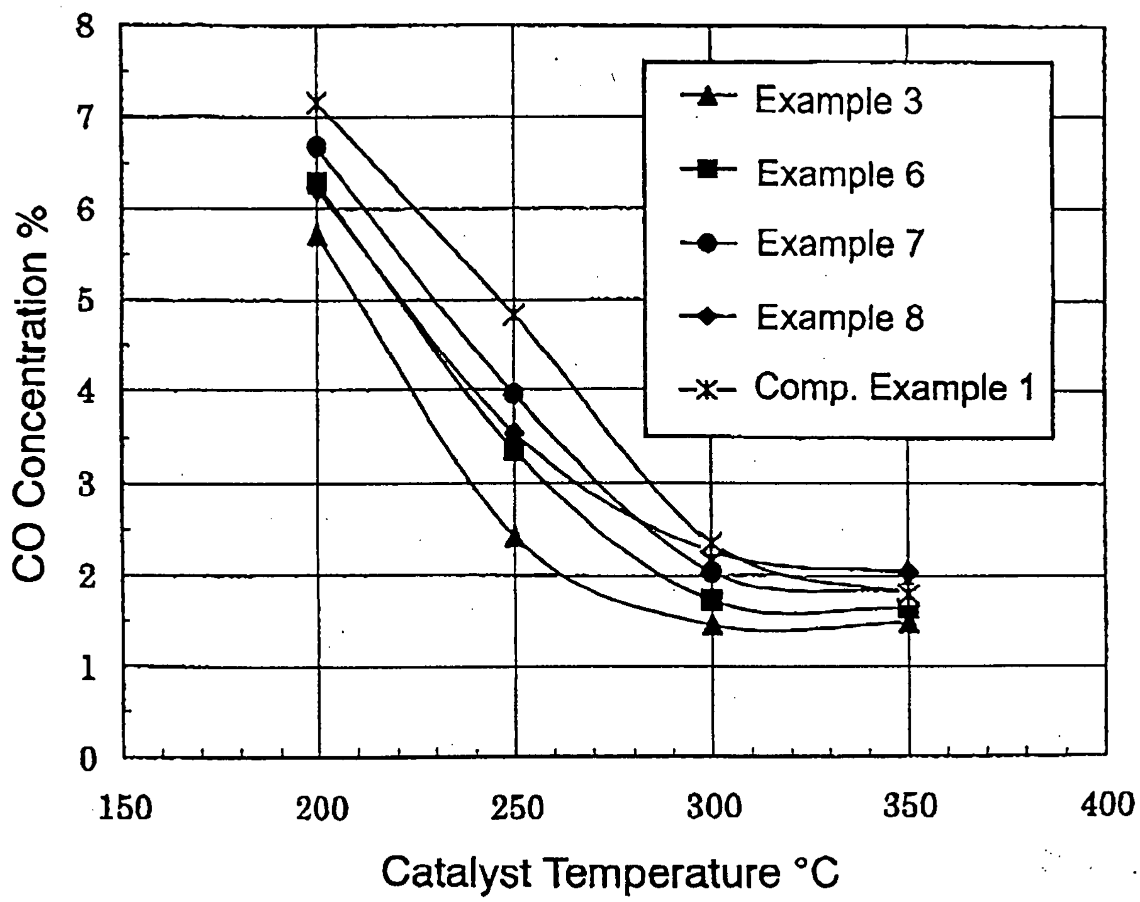
8
7
6
5
4
3
2
1
0
150
200
250
300
350
400
CO Concentration %
Catalyst Temperature °C
Example 3
Example 6
Example 7
Example 8
Comp. Example 1

Fig. 4

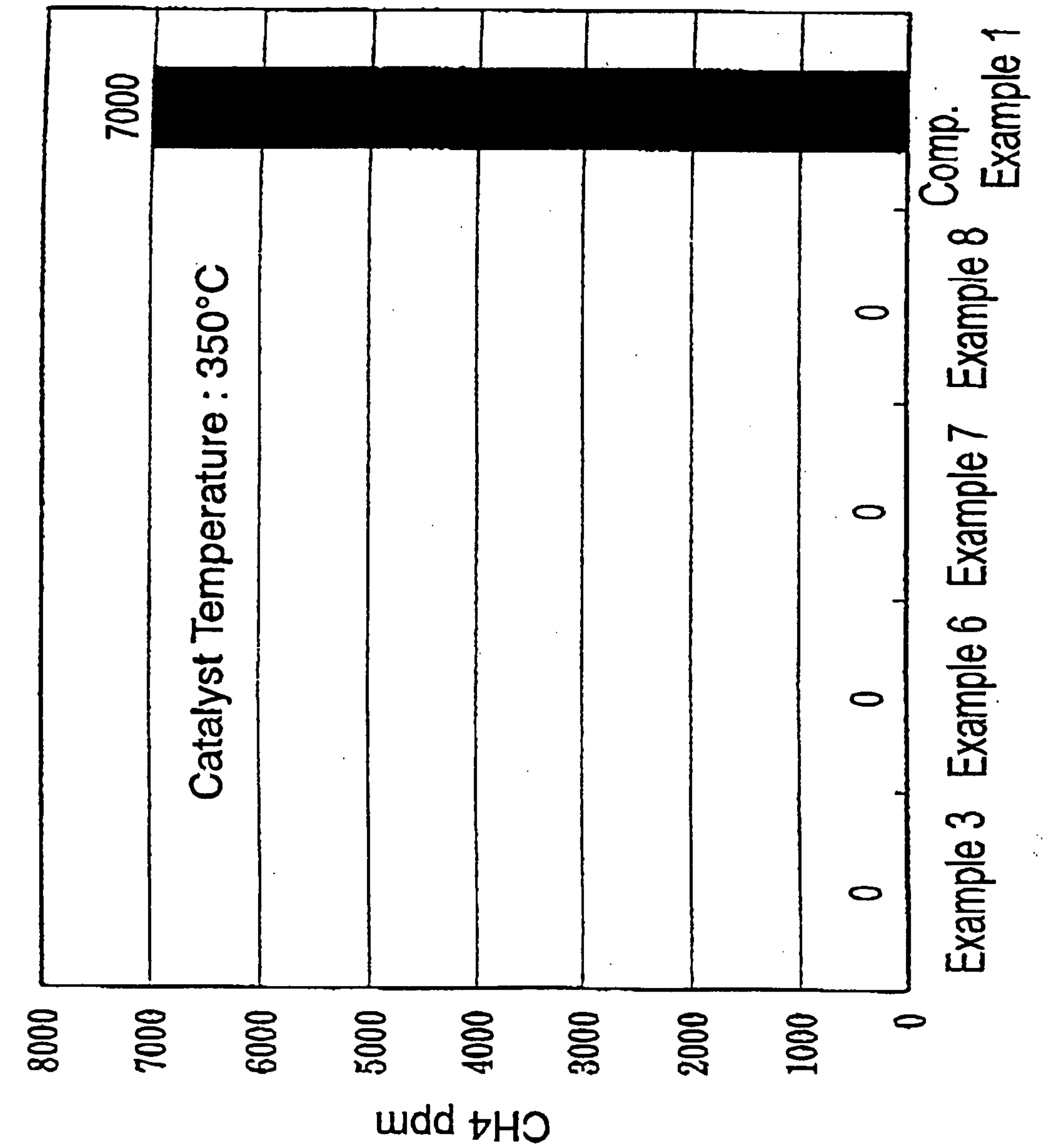
Catalyst Temperature : 350°C
CH4 ppm
8000
7000
6000
5000
4000
3000
2000
1000
0
7000
0
0
0
0
Example 3
Example 6
Example 7
Example 8
Comp. Example 1

Fig. 5

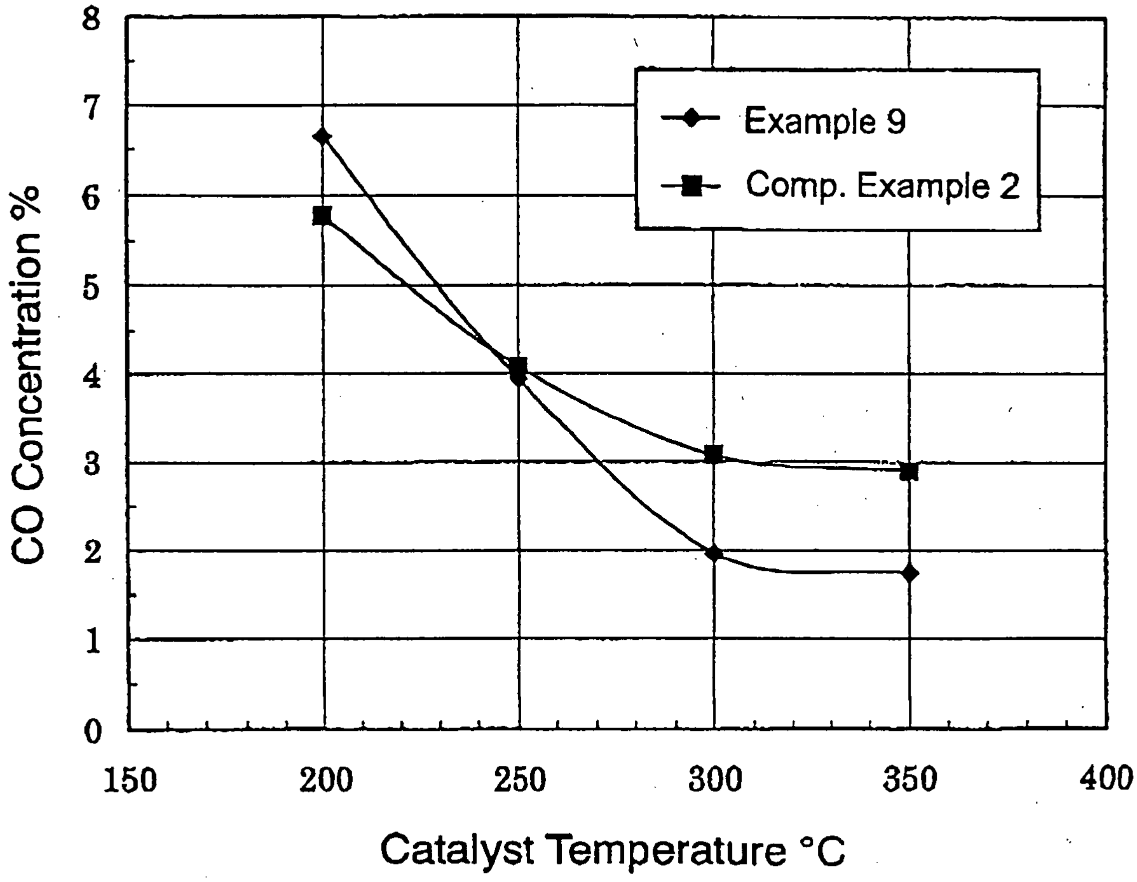

8
7
6
5
4
3
2
1
0
CO Concentration %
150
200
250
300
350
400
Catalyst Temperature °C
Example 9
Comp. Example 2

Fig. 6

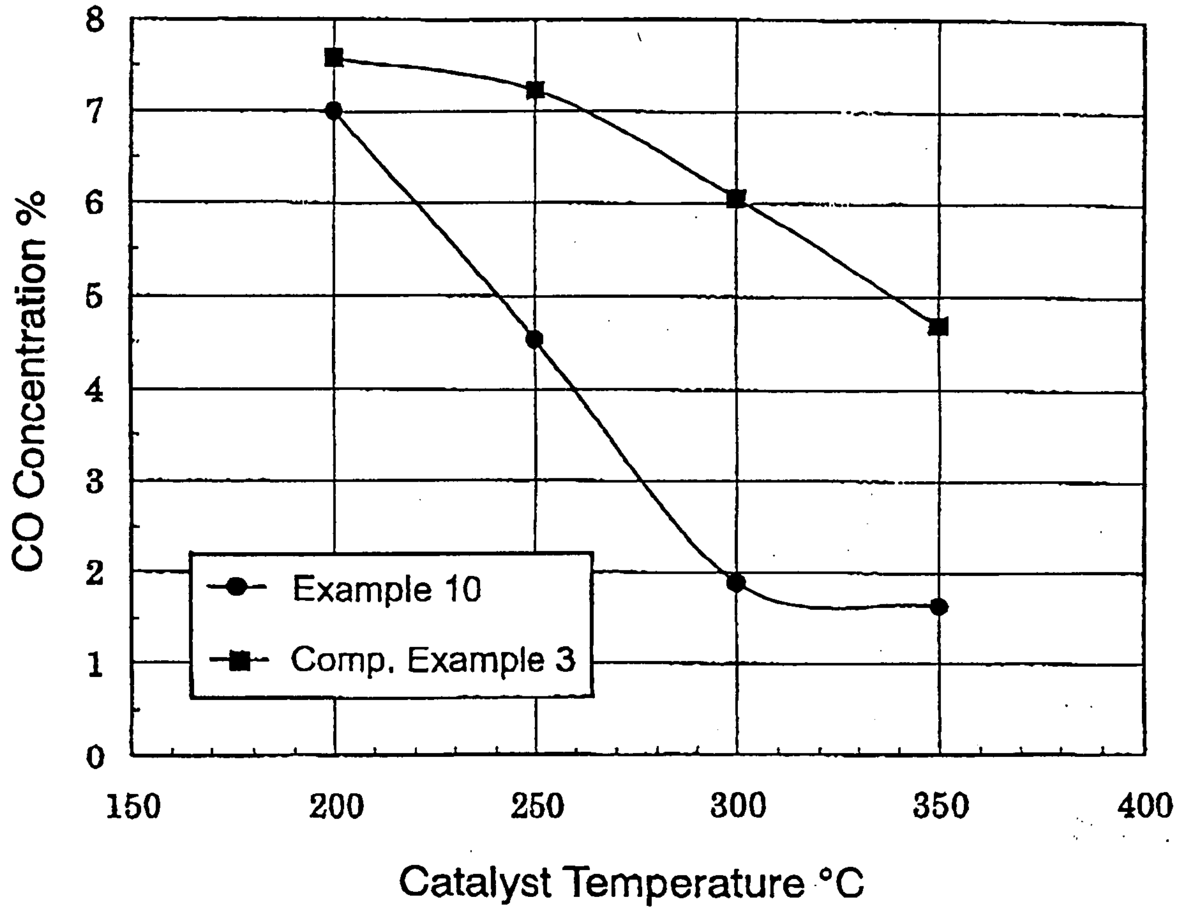
8
7
6
5
4
3
2
1
0
CO Concentration %
150
200
250
300
350
400
Catalyst Temperature °C
Example 10
Comp. Example 3

Fig. 7

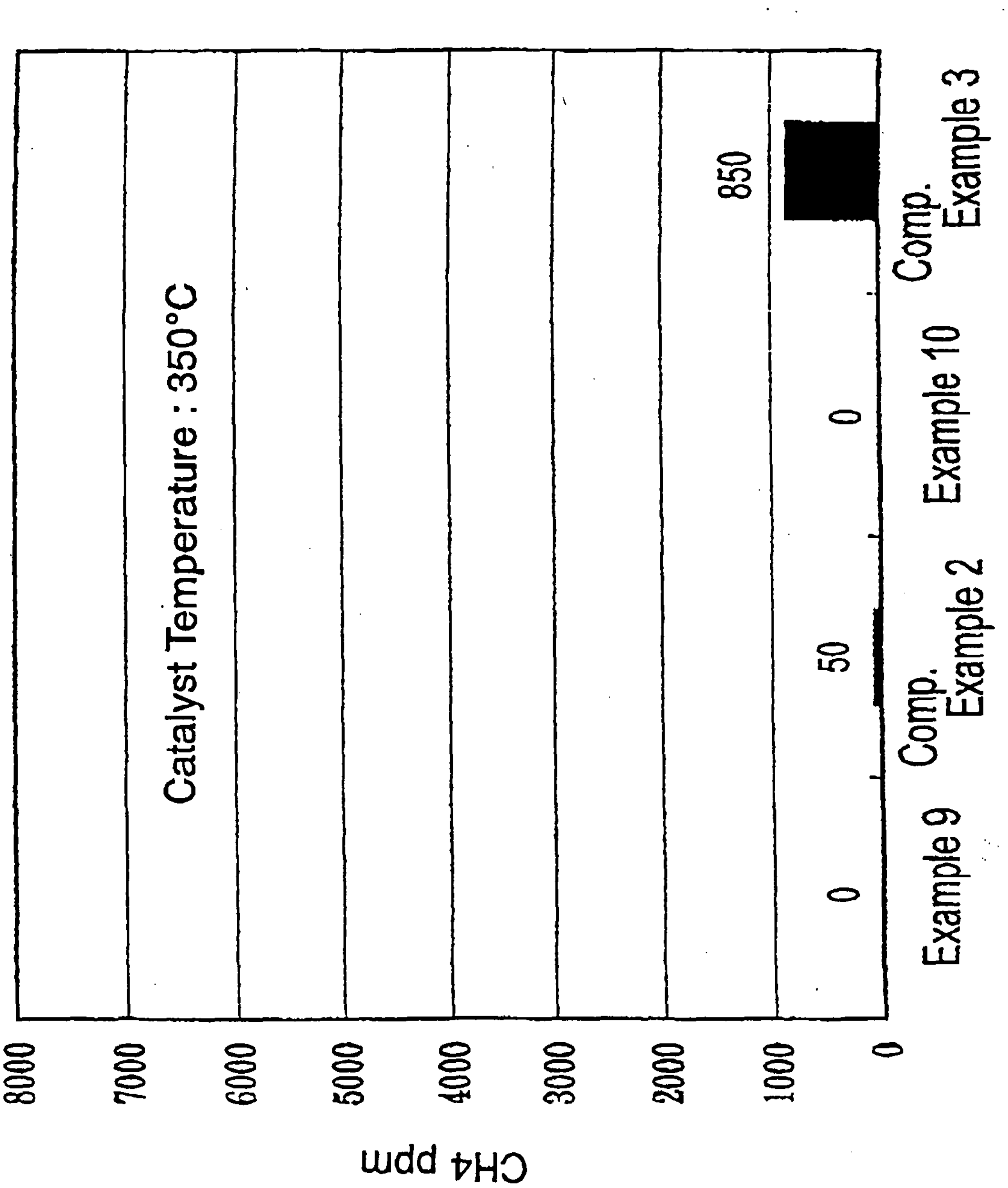
Catalyst Temperature : 350°C
CH4 ppm
8000
7000
6000
5000
4000
3000
2000
1000
0
0
Example 9
50
Comp. Example 2
0
Example 10
850
Comp. Example 3